# EUROPEAN PATENT SPECIFICATION

(11) **EP 3 641 257 B1**
(45) Date of publication and mention of the grant of the patent: **28.07.2021**
(21) Application number: 18306367.6
(22) Date of filing: 18.10.2018
(51) Int. Cl.: H04L 27/36, H04B 10/556, G02F 1/313

(54) **PHASE-SHIFT KEYING STRUCTURES**
PHASENUMTASTUNGSSTRUKTUREN
STRUCTURES DE MODULATION PAR DÉPLACEMENT DE PHASE

(43) Date of publication of application: 22.04.2020
(73) Proprietor: Nokia Solutions and Networks Oy, 02610 Espoo (FI)
(72) Inventor: VEROLET, Theo, 91 120 Palaiseau (FR); SHEN, Alexandre, 91400 Orsay (FR)
(74) Representative: Bryers LLP

(56) References cited:
- WO-A1-2016/202146
- WO-A1-2017/087766
- US-A1- 2015 277 053

## Description

### TECHNICAL FIELD

Aspects relate, in general, to a phase-shift keying, PSK, structure and method.

### BACKGROUND

Quadrature amplitude modulation formats like QAM-16, QAM-64 or QAM-256 (Quadrature Amplitude Modulation with 16, 64 or 256 constellation points, respectively corresponding to 4, 6 and 8 encoded bits per symbol) and so on are used in high bit-rate networks such as telecommunications networks, and optical transmitters (Tx) using these formats can be deployed in the form of Photonic Integrated Circuits (PIC) based on Wavelength Division Multiplexed (WDM) transmitters, which usually comprise a tuneable laser, and a Mach-Zehnder interferometer (MZI)-based Quadrature Amplitude Modulation (QAM) device. Photonic optical transmitter manufacturers are trying to integrate these modulation formats on small chipsets to get more compact packages, so as to decrease costs.

WO 2017/087766 A1 discloses an optical modulator, comprising a pair of dynamic ring resonators arranged sequentially. Each of the dynamic ring resonators has an input optically connected to an input bus waveguide, a through port optically connected to the input bus waveguide, and a drop port optically connected to an output bus waveguide. Static phase shifters are arranged on the input bus and outputs bus waveguides, at a position between the dynamic ring resonators, to shift the phase of the signals output by a first of the dynamic ring resonators. A modulated, phase-shifted, signal output by a drop port of the first of the dynamic ring resonators, is combined by the second dynamic ring resonator with the signal output by the through port of the first dynamic ring resonator.

### SUMMARY

According to an example, there is provided a phase-shift keying, PSK, structure to phase-modulate a non-modulated carrier optical signal, the phase-shift keying structure comprising a static ring resonator to demultiplex the non-modulated carrier optical signal to provide an input optical signal at a predetermined wavelength λₖ, a coupler to distribute the input optical signal to inputs of respective of first and second dynamic ring resonators arranged in parallel with respect to one another, each of the dynamic ring resonators comprising first and second outputs, static phase shifters arranged on respective first and second outputs of each of the first and second dynamic ring resonators to shift the phase of respective signals output at the first and second outputs of each of the first and second dynamic ring resonators and outputs respective phase shifted outputs, and a multiplexer to receive the phase shifted outputs from each of the static phase shifters and multiplex the phase shifted outputs to generate a modulated output signal. The PSK structure can further comprise a second static ring resonator to receive an output of the multiplexer. Each static phase shifter can adjust the phase of the input optical signal. The PSK structure can further comprise means to independently modify a refractive index of the first and second dynamic ring resonators. The PSK structure can further comprise an input bus to provide the non-modulated carrier optical signal, and an output bus to receive the modulated output signal. One or both of the input and output buses can be straight waveguides.

According to an example, there is provided a method for phase-modulating a non-modulated carrier optical signal, the method comprising demultiplexing, using a static ring resonator, the non-modulated carrier optical signal to provide an input optical signal at a predetermined wavelength λₖ distributing, using a coupler, the input optical signal to respective inputs of first and second dynamic ring resonators arranged in parallel, shifting, using static phase shifters, the phase of respective signals output at first and second outputs of each of the first and second dynamic ring resonators and outputting, for each of the first and second dynamic ring resonators, two phase shifted outputs of mutually different phase, and multiplexing, using a multiplexer, phase shifted outputs from each of the static phase shifters to generate a modulated output signal. The method can further comprise switching, in each branch of the dynamic ring resonator structure, the input optical signal to deliver the input optical signal to a selected static phase shifter. The method can further comprise modifying the resonance of a dynamic ring resonator by applying a modulating electrical signal thereto to change the refractive index of the dynamic ring resonator. The method can further comprise adjusting an amplitude of the modulating electrical signal to an extinction ratio of the dynamic ring resonator spectral transmission, so as to provide amplitude modulation of the input optical signal. The method can further comprise distributing the modulated output signal to an output bus. The method can further comprise using a static ring resonator to couple the modulated signal to the output bus.

### BRIEF DESCRIPTION OF THE DRAWINGS

Embodiments will now be described, by way of example only, with reference to the accompanying drawings, in which:
Figure 1 is a schematic representation of a photonic phase-shift keying, PSK, structure according to an example;
Figure 2 is a flowchart of a method for phase-modulating a non-modulated carrier optical signal according to an example; and
Figure 3 is a schematic representation of a WDM Tx system comprising a series of the structures of figure 1, according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, a QAM device can use multiple dynamically driven ring resonators (RR). The RR can be used in place of an MZI. However, since RR still use input pads, the space needed for an implementation using RR increases with the number of RR in use. Therefore, according to an example, two dynamic RRs are used, thus using only two high speed electrical signals to drive the device, with the associated reduction in real estate.

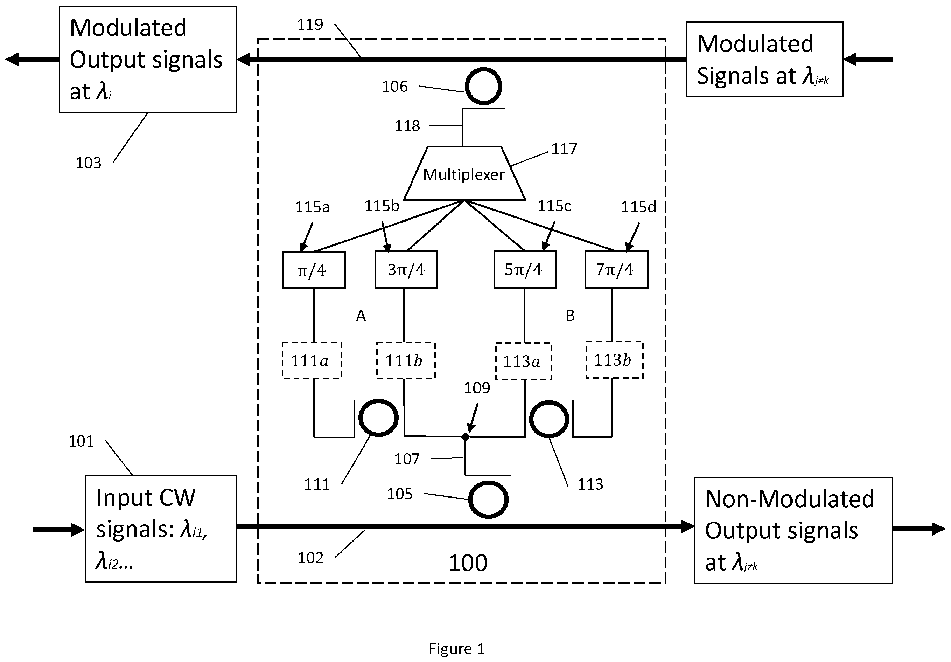

Figure 1 is a schematic representation of a photonic phase-shift keying, PSK, structure according to an example. Structure 100 can be used to phase-modulate a non-modulated carrier optical signal 101 to generate a modulated output signal 103. Structure 100 comprises a static ring resonator 105 to demultiplex the non-modulated carrier optical signal 100 so as to provide an input optical demultiplexed signal 107 at a predetermined wavelength λₖ. For example, codirectional evanescent coupling between the RR 105 and an adjacent bus waveguide 102 can be used to demultiplex the non-modulated carrier optical signal 100 to provide the input optical demultiplexed signal 107.

The demultiplexed signal 107, at a given wavelength λₖ, can be divided in two equal parts by a coupler 109 that distributes the input optical signal 107 to inputs of respective of first 111 and second 113 dynamic ring resonators arranged in parallel with respect to one another. Coupler 109 can be a 3dB coupler or a 1x2 multimode interference (MMI) coupler for example. The coupler 109 thus distributes the signal 107 into two arms A and B of the structure 100.

Each of the dynamic ring resonators 111, 113 comprise first 111a; 113a and second 111b; 113b output ports. In an example, static phase shifters 115a-d are arranged on respective first and second outputs of each of the two dynamic ring resonators. The static phase shifters 115a-d shift the phase of a signal input to them by a pre-determined phase value to provide respective phase shifted outputs. Some examples of predetermined phase shift values for the static phase shifters are depicted in figure 1, although values other than those specified may be used as desired. A multiplexer 117 to generate a modulated output signal 103 by multiplexing the phase shifted outputs from the dynamic ring resonators is provided upstream of the static phase shifters.

In each of the arms, A; B, of the structure 100 the dynamic RR 111; 113 is used to switch the received optical signal at λₖ to either of its through (113a or 111b) or drop (113b or 111a) output ports. As depicted in figure 1, each of the through or drop ports is followed by a waveguide on which a static phase shifter is preliminarily positioned and tuned at a custom value.

Behind the static phase sections the waveguides are combined into the static multiplexer 117, which can be a 4x1 MMI coupler for example. The output of the 4 to 1 MUX 117 is coupled to the static RR 106 which injects the QAM signal 103 at λₖ into a bus waveguide 119. In an example, the static RR 106 plays the role of multiplexing of the signal and of preventing modulated signals at other wavelength from entering the structure 100.

In an example, both static RRs 105, 106 and both dynamic RRs 111, 113 have the same geometric design (e.g. diameter, guide width, effective index) in order to enable them to filter the related signal at λₖ.

According to an example, an electrical driving signal can be applied on the RRs 111, 113 in order to cause them to switch their output either to a through (113a or 111b) or drop (113b or 111a) port. Thus, by driving each of the RRs 111, 113, signal 107 can be routed to specific static phase shifters 115a, 115b; 115c, 115d. For example, a particular electrical driving signal applied to RR 111 can cause the signal 107 to be passed via either of static phase shifters 115a or 115b. Similarly, a particular electrical driving signal applied to RR 113 can cause the signal 107 to be passed via either of static phase shifters 115c or 115d.

According to an example, an applied electrical driving signal causes a change in the refractive index of the RR 111, 113. Changing the refractive index of the RR modifies the resonance profile of the device, thereby enabling selection of a specific resonance wavelength that enables the input signal 107 to be switched between the outputs of the RRs 111, 113.

Carrier density variation in a causal medium is linked to refractive index variation by way of the fast carrier depletion effect (through the Kramers-Kronig relations), because these two physical quantities are proportional to the imaginary and real part of the complex refractive index of the said material/medium. Thus, in an example, this fast carrier depletion effect, which can be achieved through a p-n junction, can be used to alter the refractive index of an RR (111 and 113) inside the photonic PSK modulator structure.

In an example, the refractive index of an RR can also be varied by way of the slow thermo-optical effect. For example, by using a Joule effect heater in the vicinity of the RRs. This can be used for the static RR for demux and mux functionalities.

According to an example, structure 100 can form part of an optical transmitter. The optical transmitter can include the input bus 102 to deliver the input optical signal 107 at the selected wavelength from the non-modulated optical signal 101 to the first static ring resonator 105, and an output bus 119 to receive the modulated signal from the second static ring resonator 106.

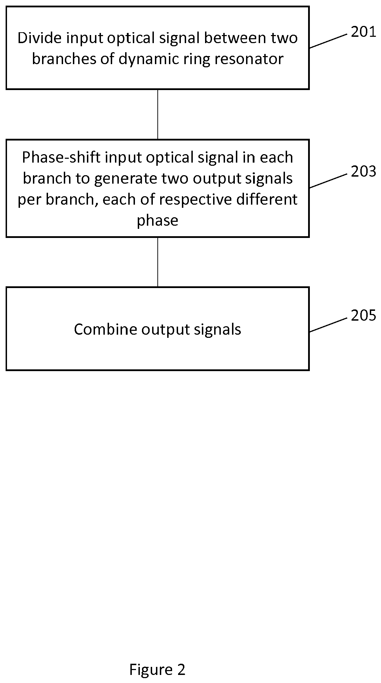

Figure 2 is a flowchart of a method for phase-modulating a non-modulated carrier optical signal according to an example. In block 201 an input optical signal 107 at a predetermined wavelength λₖ is divided between two branches (A; B) of a dynamic ring resonator structure 100 comprising a pair (111; 113) of tunable ring resonators arranged in parallel. In block 203, the input optical signal is phase-shifted, in each branch (A; B), to generate two output signals per branch, each of respective different phase. In block 205, the output signals are combined.

As noted above, the input optical signal 107 can be switched, in each branch of the dynamic ring resonator structure, to deliver it to selected static phase shifters (115a-d). In order to effect the switching, the resonance of a dynamic ring resonator (111; 113) can be modified by applying a modulating electrical signal thereto in order to change the refractive index of the dynamic ring resonator in question, thereby altering the resonance wavelength. In an example, an amplitude of the modulating electrical signal can be modified to an extinction ratio of a dynamic ring resonator spectral transmission, so as to additionally provide amplitude modulation of the input optical signal. The output signals from the static phase shifters are multiplexed, forming a modulated output signal 118 to be distributed (by way of RR 106) to the output bus 119.

In the example of figure 1, the structure 100 can demultiplex an input signal from bus 102 from multiple other input signals (of differing wavelengths) that may themselves be demultiplexed by another similar structure at a different point along the length of the bus 102. Similarly, the output signal 118 is distributed to bus 119 that can carry a multitude of other modulated signals at respective different wavelengths.

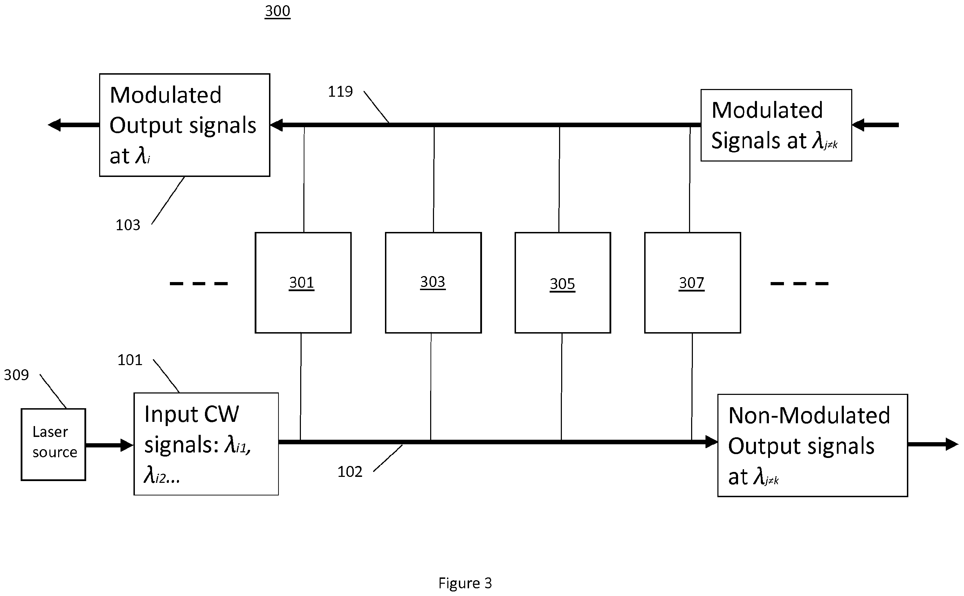

This is depicted schematically in figure 3, which shows a WDM Tx system 300 comprising a series 301; 303; 305; 307 of the previously described QAM structures. Each of the different QAM devices 301; 303; 305; 307 are each designed with similar RRs to modulate corresponding channel at their respective selected wavelengths. A WDM comb laser source 309 for example can be used to emit a WDM CW signal 101 into the feed bus waveguide 102.

The structure 100 is compact, partly as a result of the reduction in the number of RRs used, thereby reducing the number of input pads. It also provides a reduction of the number of electrical driving signals that are used (i.e. one driving signal per RR 111; 113). Thus, the double phase switching structure 100 enables a reduction in the complexity of radiofrequency (RF) connections of a photonic integrated circuit, for example, reducing the power consumption, and further shrinking the footprint of a packaged transmitter.

The present invention can be embodied in other specific apparatus and/or methods. The described embodiments are to be considered in all respects as illustrative and not restrictive. In particular, the scope of the invention is indicated by the appended claims rather than by the description and figures herein. All changes that come within the meaning of the claims are to be embraced within their scope.

## Claims

1. A phase-shift keying, PSK, structure (100) to phase-modulate a non-modulated carrier optical signal (101), the phase-shift keying structure (100) comprising:
a static ring resonator (105) to demultiplex the non-modulated carrier optical signal (101) to provide an input optical signal (107) at a predetermined wavelength λₖ;
a coupler (109) to distribute the input optical signal (107) to respective inputs of first and second dynamic ring resonators (111, 113) arranged in parallel with respect to one another, each of the dynamic ring resonators (111, 113) comprising first and second outputs (111a, 111b; 113a, 113b);
static phase shifters (115a-d) arranged on respective first and second outputs (111a, 111b; 113a, 113b) of each of the first and second dynamic ring resonators (111, 113) to shift the phase of respective signals output at the first and second outputs (111a, 111b; 113a, 113b) of each of the first and second dynamic ring resonators (111, 113) and output respective phase shifted outputs; and
a multiplexer (117) to receive the phase shifted outputs from each of the static phase shifters (115a-d) and multiplex the phase shifted outputs to generate a modulated output signal (103).

2. A PSK structure (100) as claimed in claim 1, further comprising:
a second static ring resonator (106) to receive an output of the multiplexer (117).

3. A PSK structure (100) as claimed in claim 1 or 2, wherein each static phase shifter (115a-d) is configured to adjust the phase of the input optical signal (107).

4. A PSK structure (100) as claimed in any preceding claim, further comprising:
means to independently modify a refractive index of the first and second dynamic ring resonators (111, 113).

5. A PSK structure (100) as claimed in any preceding claim, further comprising:
an input bus (102) to provide the non-modulated carrier optical signal (101); and
an output bus (119) to receive the modulated output signal (103).

6. A PSK Structure (100) as claimed in claim 5, wherein one or both of the input and output buses (102, 119) are straight waveguides.

7. A method for phase-modulating a non-modulated carrier optical signal (101), the method comprising:
demultiplexing, using a static ring resonator (105), the non-modulated carrier optical signal (101) to provide an input optical signal (107) at a predetermined wavelength λₖ;
distributing, using a coupler, the input optical signal (107) to respective inputs of first and second dynamic ring resonators (111, 113) arranged in parallel;
shifting, using static phase shifters (115a-d), the phase of respective signals output at first and second outputs of each of the first and second dynamic ring resonators (111, 113) and outputting, for each of the first and second dynamic ring resonators (111, 113), two phase shifted outputs of mutually different phase; and
multiplexing, using a multiplexer (117), phase shifted outputs from each of the static phase shifters (115a-d) to generate a modulated output signal (103).

8. A method as claimed in claim 7, further comprising:
switching, in each of the dynamic ring resonators (111, 113), the input optical signal (107) to deliver the input optical signal (107) to a selected static phase shifter (115a-d).

9. A method as claimed in claim 7 or 8, further comprising:
modifying the resonance of a dynamic ring resonator (111, 113) by applying a modulating electrical signal thereto to change the refractive index of the dynamic ring resonator (111, 113).

10. A method as claimed in claim 9, further comprising adjusting an amplitude of the modulating electrical signal to an extinction ratio of the dynamic ring resonator (111, 113) spectral transmission, so as to provide amplitude modulation of the input optical signal (107).

11. A method as claimed in any of claims 7 to 10, further comprising distributing the modulated output signal to an output bus (119).

12. A method as claimed in claim 11, further comprising:
using a static ring resonator (105, 106) to couple the modulated output signal to the output bus (119).

## Patentansprüche

1. Phasenumtastungsstruktur (Phase-shift keying, PSK) (100) zur Phasenmodulation eines nicht-modulierten optischen Trägersignals (101), wobei die Phasenumtastungsstruktur (100) Folgendes umfasst:
einen statischen Ringresonator (105) zum Demultiplexen des nicht-modulierten optischen Trägersignals (101), um ein optisches Eingangssignal (107) mit einer vorbestimmten Wellenlänge λₖ bereitzustellen;
einen Koppler (109) zum Verteilen des optischen Eingangssignals (107) auf entsprechende Eingänge von ersten und zweiten dynamischen Ringresonatoren (111, 113), die parallel zueinander angeordnet sind, wobei jeder der dynamischen Ringresonatoren (111, 113) erste und zweite Ausgänge (111a, 111b; 113a, 113b) aufweist;
statische Phasenschieber (115a-d), die an jeweiligen ersten und zweiten Ausgängen (111a, 111b; 113a, 113b) jedes der ersten und zweiten dynamischen Ringresonatoren (111, 113) angeordnet sind, um die Phase jeweiliger Signale zu verschieben, die an den ersten und zweiten Ausgängen (111a, 111b; 113a, 113b) jedes der ersten und zweiten dynamischen Ringresonatoren (111, 113) ausgegeben werden, und jeweilige phasenverschobene Ausgaben auszugeben; und
einen Multiplexer (117) zum Empfangen der phasenverschobenen Ausgaben von jedem der statischen Phasenschieber (115a-d) und zum Multiplexen der phasenverschobenen Ausgaben, um ein modulierten Ausgangssignal (103) zu erzeugen.

2. Phasenumtastungsstruktur (100) nach Anspruch 1, ferner umfassend: einen zweiten statischen Ringresonator (106) zum Empfangen einer Ausgabe des Multiplexers (117).

3. Phasenumtastungsstruktur (100) nach Anspruch 1 oder 2, wobei jeder statische Phasenschieber (115a-d) konfiguriert ist, um die Phase des optischen Eingangssignals (107) anzupassen.

4. Phasenumtastungsstruktur (100) nach einem der vorstehenden Ansprüche, ferner umfassend:
Mittel, um einen Brechungsindex des ersten und zweiten dynamischen Ringresonators (111, 113) unabhängig voneinander zu modifizieren.

5. Phasenumtastungsstruktur (100) nach einem der vorstehenden Ansprüche, ferner umfassend:
einen Eingangsbus (102), um das nicht-modulierte optische Trägersignal (101) bereitzustellen; und
einen Ausgangsbus (119), um das modulierte Ausgangssignal (103) zu empfangen.

6. Phasenumtastungsstruktur (100) nach Anspruch 5, wobei einer oder beide der Eingangs- und Ausgangsbusse (102, 119) gerade Wellenleiter sind.

7. Verfahren zur Phasenmodulation eines nicht-modulierten optischen Trägersignals (101), wobei das Verfahren umfasst:
Demultiplexen, unter Verwendung eines statischen Ringresonators (105), des nicht-modulierten optischen Trägersignals (101), um ein optisches Eingangssignal (107) mit einer vorbestimmten Wellenlänge λₖ bereitzustellen;
Verteilen, unter Verwendung eines Kopplers, des optischen Eingangssignals (107) auf entsprechende Eingänge von ersten und zweiten dynamischen Ringresonatoren (111, 113), die parallel angeordnet sind;
Verschieben, unter Verwendung von statischen Phasenschiebern (115a-d), der Phase von jeweiligen Signalen, die an ersten und zweiten Ausgängen jedes der ersten und zweiten dynamischen Ringresonatoren (111, 113) ausgegeben werden, und Ausgeben, für jeden der ersten und zweiten dynamischen Ringresonatoren (111, 113), von zwei phasenverschobenen Ausgaben mit gegenseitig unterschiedlicher Phase; und
Multiplexen, unter Verwendung eines Multiplexers (117), der phasenverschobenen Ausgaben von jedem der statischen Phasenschieber (115a-d), um ein modulierten Ausgangssignal (103) zu erzeugen.

8. Verfahren nach Anspruch 7, ferner umfassend:
Schalten des optischen Eingangssignals (107) in jedem der dynamischen Ringresonatoren (111, 113), um das optische Eingangssignal (107) an einen ausgewählten statischen Phasenschieber (115a-d) zu liefern.

9. Verfahren nach Anspruch 7 oder 8, ferner umfassend:
Modifizieren der Resonanz eines dynamischen Ringresonators (111, 113) durch Anlegen eines modulierenden elektrischen Signals an diesen, um den Brechungsindex des dynamischen Ringresonators (111, 113) zu ändern.

10. Verfahren nach Anspruch 9, ferner umfassend das Anpassen einer Amplitude des modulierenden elektrischen Signals an ein Extinktionsverhältnis der spektralen Transmission des dynamischen Ringresonators (111, 113), um eine Amplitudenmodulation des optischen Eingangssignals (107) bereitzustellen.

11. Verfahren nach einem der Ansprüche 7 bis 10, ferner umfassend das Verteilen des modulierten Ausgangssignals auf einen Ausgangsbus (119).

12. Verfahren nach Anspruch 11, ferner umfassend:
Verwenden eines statischen Ringresonators (105, 106) zum Koppeln des modulierten Ausgangssignals mit dem Ausgangsbus (119) .

## Revendications

1. Structure de modulation par déplacement de phase, PSK, (100) destinée à moduler en phase un signal optique de porteuse non modulé (101), dans lequel la structure de modulation par déplacement de phase (100) comprend :
un résonateur en anneau statique (105) destiné à démultiplexer le signal optique de porteuse non modulé (101) afin d'obtenir un signal optique d'entrée (107) à une longueur d'onde prédéterminée λₖ ;
un coupleur (109) destiné à distribuer le signal optique d'entrée (107) aux entrées respectives d'un premier et d'un deuxième résonateurs en anneau dynamiques (111, 113) disposés en parallèle l'un par rapport à l'autre, dans lequel chacun des résonateurs en anneau dynamiques (111, 113) comprend une première et une deuxième sorties (111a, 111b ; 113a, 113b) ;
des déphaseurs statiques (115a-d) disposés sur la première et la deuxième sorties respectives (111a, 111b ; 113a, 113b) de chacun du premier et du deuxième résonateurs en anneau dynamiques (111, 113) afin de déplacer la phase des signaux respectifs délivrés au niveau de la première et de la deuxième sorties (111a, 111a ; 113a, 113b) de chacun du premier et du deuxième résonateurs en anneau dynamiques (111, 113) et de délivrer des sorties à déplacement de phase respectives ; et
un multiplexeur (117) destiné à recevoir les sorties à déplacement de phase de chacun des déphaseurs statiques (115ad) et à multiplexer les sorties à déplacement de phase afin de générer un signal de sortie modulé (103).

2. Structure PSK (100) selon la revendication 1, qui comprend en outre :
un deuxième résonateur en anneau statique (106) destiné à recevoir une sortie du multiplexeur (117).

3. Structure PSK (100) selon la revendication 1 ou 2, dans laquelle chaque déphaseur statique (115a-d) est configuré pour ajuster la phase du signal optique d'entrée (107).

4. Structure PSK (100) selon l'une quelconque des revendications précédentes, qui comprend en outre :
un moyen destiné à modifier de manière indépendante un indice de réfraction du premier et du deuxième résonateurs en anneau dynamiques (111, 113).

5. Structure PSK (100) selon l'une quelconque des revendications précédentes, qui comprend en outre :
un bus d'entrée (102) destiné à fournir le signal optique de porteuse non modulé (101) ; et
un bus de sortie (119) destiné à recevoir le signal de sortie modulé (103).

6. Structure PSK (100) selon la revendication 5, dans laquelle l'un ou les deux des bus d'entrée et de sortie (102, 119) sont des guides d'onde droits.

7. Procédé de modulation de phase d'un signal optique de porteuse non modulé (101), dans lequel le procédé comprend :
le démultiplexage, à l'aide d'un résonateur en anneau statique (105), du signal optique de porteuse non modulé (101) afin d'obtenir un signal optique d'entrée (107) à une longueur d'onde prédéterminée λₖ ;
la distribution, à l'aide d'un coupleur, du signal optique d'entrée (107) aux entrées respectives du premier et du deuxième résonateurs en anneau dynamiques (111, 113) disposés en parallèle ;
le déplacement, à l'aide de déphaseurs statiques (115ad), de la phase des signaux respectifs délivrés au niveau de la première et de la deuxième sorties de chacun du premier et du deuxième résonateurs en anneau dynamiques (111, 113), et la délivrance, pour chacun du premier et du deuxième résonateurs en anneau dynamiques (111, 113), de deux sorties déphasées à phases mutuellement différentes ; et
le multiplexage, à l'aide d'un multiplexeur (117), des sorties déphasées de chacun des déphaseurs statiques (115a-d) afin de générer un signal de sortie modulé (103).

8. Procédé selon la revendication 7, qui comprend en outre :
le déclenchement, dans chacun des résonateurs en anneau dynamiques (111, 113), du signal optique d'entrée (107) afin de délivrer le signal optique d'entrée (107) à un déphaseur statique choisi (115a-d).

9. Procédé selon la revendication 7 ou 8, qui comprend en outre :
la modification de la résonance d'un résonateur en anneau dynamique (111, 113) en appliquant un signal électrique de modulation à celui-ci afin de modifier l'indice de réfraction du résonateur en anneau dynamique (111, 113).

10. Procédé selon la revendication 9, qui comprend en outre l'ajustement d'une amplitude du signal électrique de modulation selon un rapport d'extinction de transmission spectrale du résonateur en anneau dynamique (111, 113), de façon à assurer une modulation d'amplitude du signal optique d'entrée (107).

11. Procédé selon l'une quelconque des revendications 7 à 10, qui comprend en outre la distribution du signal de sortie modulé à un bus de sortie (119).

12. Procédé selon la revendication 11, qui comprend en outre :
l'utilisation d'un résonateur en anneau statique (105, 106) afin de coupler le signal de sortie modulé au bus de sortie (119).
